# EUROPÄISCHE PATENTSCHRIFT

(11) **EP 3 354 956 B1**
(45) Veröffentlichungstag und Bekanntmachung des Hinweises auf die Patenterteilung: **20.11.2019**
(21) Anmeldenummer: 18152550.2
(22) Anmeldetag: 19.01.2018
(51) Int. Cl.: F16L 55/179, F16L 55/26, F16L 55/18

(54) **PACKERANORDNUNG MIT BETRIEBSVERFAHREN UND MONTAGEVERFAHREN**
PACKING ARRANGEMENT WITH OPERATING METHOD AND FITTING METHOD
DISPOSITIF DE GARNITURE D'ÉTANCHÉITÉ, SON PROCÉDÉ DE FONCTIONNEMENT ET SON PROCÉDÉ DE MONTAGE

(30) Priorität: 25.01.2017 DE 102017101394
(43) Veröffentlichungstag der Anmeldung: 01.08.2018
(73) Patentinhaber: HD Sanierungstechnik GmbH, 91126 Kammerstein (DE)
(72) Erfinder: Heiberger, Richard-Michael, 91126 Kammerstein (DE)
(74) Vertreter: Negendanck, Matthias

(56) Entgegenhaltungen:
- EP-A1- 0 465 892
- DE-A1-102009 052 367
- DE-A1-102010 053 113
- US-A- 5 609 439
- US-A1- 2008 236 692
- US-A1- 2011 203 719

## Beschreibung

Die Erfindung betrifft eine Packeranordnung zur Innenbearbeitung eines Rohres, ein Verfahren zum Betreiben einer Packeranordnung und ein Verfahren zur Montage einer Auskleidung an einer Innenwand eines Rohres.

Sogenannte Packer werden zur Innenbearbeitung von Rohren eingesetzt. Beispielsweise dienen Sie zur Abdichtung und/oder Innensanierung von Rohrleitungen. Ein besonderes Einsatzgebiet ist die Innensanierung von Abwasserrohren mit einmündenden Abzweigrohren. Eine Problemstellung ist hierbei das Auskleiden des Übergangsbereiches zwischen einem Abwasserhauptrohr und einem in das Hauptrohr einmündenden Abzweigrohres.

Aus der EP 0 465 892 A1 ist ein Verfahren zum Abdichten der Mündung einer seitlich in eine Kanalrohrleitung einmündenden Zulaufleitung bekannt, das ein Anschlußstück mit einem dehnbaren Faservlies verwendet, das sich von einem Dehnkörper in die Zulaufleitung drücken läßt. Das Anschlußstück wird auf dem Dehnkörper mit einem Schlitten in die Kanalrohrleitung eingefahren. Eine mitgeführte Fernsehkamera wird achsgleich mit der abzudichtenden Mündung der Zulaufleitung in Stellung gebracht. Das Anschlußstück wird radial ausgerichtet und zu der Zulaufleitung hin verschoben. Anschließend wird das Anschlußstück mit Hilfe von einem Druckschild deckungsgleich mit der Mündung am Rand der Mündung zur Anlage gebracht und in die Zulaufleitung gedrückt.

Aus der DE 10 2010 053 113 A1 ist ein Packer zum Auskleiden des Übergangsbereiches zwischen einem Abwasserhauptrohr und einem in das Hauptrohr einmündenden Hausanschlussrohr bekannt, umfassend ein Tragrohr, wobei das Tragrohr auf dem Umfang mindestens zwei aus elastischem Material hergestellte Mäntel aufweist, die übereinander angeordnet sind, wobei die beiden Mäntel endseitig umlaufend miteinander verbunden sind, und wobei der äußere Mantel einen aus elastischem Material ausgebildeten Aufsatz aufweist, wobei der Raum zwischen den beiden Mantel ebenso mit einem Druckmedium, z. B. Luft, befüllbar ist, wie der Aufsatz auf dem äußeren Mantel.

Aus der DE 10 2009 052 367 A1 ist es bekannt, zum Einbringen eines aushärtbaren Sanierungseinsatzes in den Mündungsbereich zwischen einer Rohr-Hauptleitung und einer Rohr-Zweigleitung zwei Blähkörper zu nutzen.

Aus der US 2011/0203719 A1 ist eine Liner-Vorrichtung und ein Verfahren zur Auskleidung einer beschädigten Leitungsverbindung zwischen einer Haupt- und einer Seitenleitung bekannt.

Aus dem US Patent 5,609,439 ist es bekannt, eine beschädigte Verbindung zwischen einer Hauptleitung und einer einmündenden Abzweigleitung durch Benutzen einer Blase, die zwischen zwei Halteblöcken getragen ist, zu reparieren und zu versiegeln.

Aus der US 2008/0236692 A1 ist eine Liner-Apparatur und ein Verfahren bekannt, das die Notwendigkeit einer Blase vermeidet, um den Liner gegen die Leitung zu drücken.

Aufgabe der vorliegenden Erfindung ist es, die Innenbearbeitung eines Rohres zu verbessern.

Die Aufgabe wird gelöst durch eine Packeranordnung gemäß Patentanspruch 1 zur Innenbearbeitung eines Rohres. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Packeranordnung enthält einen Träger. Der Träger erstreckt sich entlang einer Längsachse. Die Längsachse verläuft dabei durch den bzw. innerhalb des Trägers. Der Träger weist mindestens einen ersten Längsabschnitt und mindestens einen zweiten Längsabschnitt entlang der Längsachse auf. In den jeweiligen Längsabschnitten ist der Träger jeweils in eine Radialrichtung bezüglich der Längsachse expandierbar (und kontrahierbar). Die Expandierung kann hierbei in den Längsabschnitten unabhängig voneinander und in verschiedenem Maße erfolgen. Die Expandierung kann motorisch, hydraulisch, pneumatisch oder in sonstiger Weise erfolgen. Der Träger kann auch zunächst einen Unterdruck gegenüber der Umgebung aufweisen. Die Expansion kann dann auch durch Annäherung an den Umgebungsdruck erfolgen. Hierzu dient insbesondere die Eigenspannung des Trägers, der bei Normaldruck und kraftfrei z.B. eine bestimmte vorgegebene Form, z.B. eine Zylinderform aufweist. Ein Unterdruck kann z.B. durch mechanisches Komprimieren eines Trägers bei geöffnetem Ventil im Träger und Verschluss des Ventils bei komprimiertem Träger erfolgen. Wird die äußere Komprimierungskraft dann weggenommen, möchte sich der Träger wegen seiner Eigenstabilität wieder entfalten. Dabei wird im Träger ein Unterdruck erzeugt.

Die Packeranordnung enthält eine Hülle. Die Hülle erstreckt sich ebenfalls entlang der Längsachse. Die Hülle umgibt den Träger radial außen, das heißt sie befindet in Radialrichtung bezüglich der Längsachse außerhalb des Trägers. Entlang der Längsachse erstreckt sich der Träger wenigstens über einen Kammerabschnitt der Packeranordnung bzw. des Trägers. Der Kammerabschnitt erstreckt sich entlang der Längsachse vom ersten bis zum zweiten Längsabschnitt, d.h. er reicht jeweils zumindest teilweise in die Längsabschnitte hinein, so dass eine ausreichende Dichtwirkung zwischen Träger und Hülle erzielt wird, wie weiter unten ausführlich beschrieben wird. Vorzugsweise erstreckt sich der Kammerabschnitt auch vollständig über zumindest einen der Längsabschnitte oder auch über zumindest einen der Längsabschnitte hinaus. Die beiden Längsabschnitte sind dann Teil des Kammerabschnitts.

Sowohl die Hülle als auch der Träger sind im Kammerabschnitt dicht gegenüber einem Druckmedium ausgeführt. Die Dichtheit reicht hierbei zumindest so weit, dass ein Druckaufbau - gegebenenfalls unter Nachströmung von Druckmedium - möglich ist, wie weiter unten beschrieben wird.

Der Träger weist zwischen dem ersten und dem zweiten Längsabschnitt eine radial nach außen offene Auslassöffnung auf. Durch die Auslassöffnung kann Druckmedium also radial auswärts, vom Träger aus gesehen, aus dem Träger ausströmen. Die Auslassöffnung kommuniziert allerdings nicht mit dem Trägerinnenraum. Das Druckmedium kann so in einen Mantelbereich einströmen bzw. diesen befüllen, wobei der Mantelbereich zwischen (den ausreichend druckdichten Abschnitten von) Träger und Hülle gebildet ist.

Die Hülle ist eine flexible und/oder dehnbare Hülle. Somit kann die Hülle besonders einfach bzw. gut auf den Träger aufgebracht oder von diesem entfernt werden und einer Expansion des Trägers auf den Längsabschnitten besonders gut folgen. Auch wird die Hülle per Dehnung durch die expandierten Längsabschnitte mittels Reibschluss auf dem Träger gehalten. Die Hülle ist beispielsweise aus einem Gummimaterial gefertigt bzw. enthält ein solches.

Durch die in Radialrichtung gerichtete Expandierbarkeit der Längsabschnitte können diese in einem zu bearbeitenden Rohr expandiert und damit gegen die Innenwand verpresst werden, wenn die Packeranordnung in das Rohr eingebracht ist. Somit wird die Hülle dicht an den Träger gepresst und im Bereich der Längsabschnitte in Umfangsrichtung gegenüber dem Träger abgedichtet. So ergibt sich ein beidseitiger Verschluss des Mantelbereiches im Bereich der Längsabschnitte und damit eine Kammer zwischen Träger und Hülle im Bereich zwischen erstem und zweitem Längsbereich. Die Auslassöffnung dient dann zur Zuführung des Druckmediums in die Kammer. Das Druckmedium ist insbesondere Druckluft, kann jedoch auch jedes andere Druckmedium, zum Beispiel ein Fluid oder ein anderes Gas sein.

Die Hülle umgibt den Träger insbesondere in Form eines Schlauches oder eines Mantels, insbesondere ist die Hülle ein Stulpschlauch. Der befüllbare bzw. abgedichtete Mantelbereich in Form der Kammer endet also jeweils an oder im Bereich der beiden Längsabschnitte. Die Kammer kann mit Druck beaufschlagt werden, um sich ihrerseits (mit der Hülle) gegen Strukturen im Inneren des Rohres usw. anzupressen oder insbesondere in ein an dieser Stelle in das Rohr mündendes Abzweigrohr hinein zu erstrecken. Die Expansion der Längsabschnitte und die Befüllung bzw. Druckbeaufschlagung der Kammer sind unabhängig voneinander.

Die Packeranordnung weist wenige Einzelteile auf, insbesondere lediglich den Träger und eine einzige einfache schlauchförmige bzw. mantelförmige Hülle und ist daher einfach und kostengünstig zu realisieren.

In einer bevorzugten Ausführungsform umgibt die Hülle den Träger lose. "Lose" bedeutet insbesondere, dass die Hülle nicht dauerhaft bzw. fest oder unlösbar am Träger befestigt ist, insbesondere nicht stoffschlüssig befestigt, nicht verklebt oder nicht zwischen Strukturteilen des Trägers verklemmt ist oder ähnliches. Allenfalls ist die Hülle z.B. durch Reibschluss zwischen Hülle und Träger auf dem Träger gehalten, wenn die Hülle am Träger anliegt und/oder zwischen Träger und Innenwand eines Rohres verpresst ist. Der Reibschluss bzw. die (temporäre) Befestigung ist auch z.B. nur für bestimmte Betriebsbedingungen vorhanden, zum Beispiel, wenn die Längsabschnitte bereits zu einem gewissen Grad aus einem Kontraktionszustand heraus expandiert sind. Dies geschieht wie oben erläutert, z.B. durch Befüllen des Trägers mit einem gewissen Überdruck gegenüber der Umgebung, aber auch durch Druckanstieg in Richtung oder bis zum Umgebungsdruck bei einer vorher zumindest teilweise evakuierten Hülle. Die Hülle kann somit (zumindest bei ausreichender Kontraktion der Längsabschnitte einfach vom Träger entfernt oder auf diesem aufgebracht werden, um beispielsweise im Verschleißfall getauscht zu werden. Besondere Befestigungsmittel und entsprechende Befestigungsschritte, wie z.B. Verkleben oder Verklemmen, bei der Herstellung der Packeranordnung entfallen.

In einer bevorzugten Ausführungsform weist die Hülle in einem Grundzustand eine Grundform auf, wobei Sie in der Grundform entlang der Längsachse konstanten Querschnitt quer zur Längsachse aufweist. Der Grundzustand ist insbesondere ein solcher, wenn die Hülle auf dem Träger gehalten ist, ohne dass der Träger expandiert ist und/oder wenn die Hülle nicht expandiert bzw. gedehnt ist. Die Grundform ist beispielsweise diejenigen eines Zylindermantels, insbesondere eines geraden Kreiszylindermantels. Im Grundzustand ist die Hülle insbesondere bezüglich einer Dehnung kraftfrei, zum Beispiel auf den zylinderförmigen Träger nur lose, aber berührend aufgelegt oder aufgestülpt.

Die Hülle weist also keine Ein- oder Ausstülpungen, Ein- oder Ausbuchtungen, Fortsätze oder ähnliches auf. Insbesondere für biegbare, und/oder elastische und/oder dehnbare Hüllen etc. gilt, dass die Querschnittsbetrachtung in einer Grundform erfolgt, wenn die Hülle in der Grundform gehalten ist oder sich in einer gedachten idealen Grundform befindet, in die sie theoretisch bringbar ist, zum Beispiel auf dem Träger.

Eine derartige Hülle ist besonders einfach und kostengünstig verfügbar bzw. herstellbar, zum Beispiel in Schlauchform mit konstantem Querschnitt bzw. über der Länge konstanten Querabmessungen.

In einer bevorzugten Variante dieser Ausführungsform ist die Hülle daher ein Stulpschlauch für den Träger. Ein entsprechender Stulpschlauch ist besonders einfach und kostengünstig verfügbar bzw. herstellbar.

In einer alternativen Ausführungsform weist die Hülle im oben genannten Grundzustand eine Grundform auf, die im Kammerabschnitt einen (bezogen auf die Längsachse) radial auswärts gerichteten Fortsatz enthält. Insbesondere ist die Grundform im restlichen Bereich der Hülle - also nur mit Ausnahme des Fortsatzes - wie oben beschrieben mit konstantem Querschnitt ausgeführt. Der Fortsatz ist besonders geeignet, um eine große Radialexpansion der Hülle im Bereich des Kammerabschnitts sicherzustellen. Im Betrieb kann die Packeranordnung dann z.B. so in einem Rohr platziert werden, dass der Fortsatz an der Stelle einer Rohrabzweigung zu liegen kommt. Der Fortsatz kann sich dann besonders gut in das Abzweigrohr hinein erstrecken, sich darin in den Expansionszuständen aufblähen und sich so mit Druck besonders gut gegen die Innenwand des Abzweigrohres anlegen.

Der Fortsatz bildet so einen Teil des mit Druckmedium befüllbaren Mantelbereiches bzw. der sich bildenden Kammer.

Der Fortsatz erstreckt sich dabei insbesondere in einer Axialrichtung vom Kammerabschnitt weg. Der Fortsatz weist dabei insbesondere selbst eine sich entlang der Axialrichtung erstreckende Grundform, z.B. eine Schlauchform und/oder einen kreisrunden Querschnitt zur Axialrichtung, auf. Insbesondere ist der Fortsatz in seinem Grundzustand/Grundform (vergleichbar zu oben) ein sich in Axialrichtung erstreckender, insbesondere gerader, Kreiszylinder. Mit einem derartigen Fortsatz können Stichleitungen, die von einer Hauptleitung abzweigen, besonders gut bearbeitet werden. Der Träger liegt dabei in der Hauptleitung, der Fortsatz ragt in die Stichleitung hinein.

Die axiale Längsdehnung des Fortsatzes (in Axialrichtung des Fortsatzes gesehen) wird insbesondere durch den Druck begrenzt bzw. gesteuert, den das Druckmedium im Mantelbereich und damit im Fortsatz aufweist.

In einer bevorzugten Variante dieser Ausführungsform weist der Fortsatz ein Begrenzungsmittel auf, das eine Längsausdehnung des Fortsatzes in dessen Axialrichtung (in etwa die Radialrichtung der Packeranordnung) auf eine Maximaldehnung begrenzt. So kann sich der Fortsatz im oben beschriebenen Fall im Expansionszustand nur bis zu einer Maximaldehnung in das Abzweigrohr hinein erstrecken. Jede weitere Beaufschlagung des Fortsatzes mit Innendruck führt dann zu keiner weiteren Längsausdehnung in das Abzweigrohr hinein, sondern zu einer Erhöhung des Drucks auf die Innenwände des Abzweigrohres.

Ein solches Begrenzungsmittel kann insbesondere ein Zugseil, eine Zugfeder oder ähnliches sein. Die axiale Längsdehnung des Fortsatzes (in Axialrichtung des Fortsatzes gesehen) wird also durch einen Mechanismus (Begrenzungsmittel, zum Beispiel Feder oder Seil etc.) gebremst, um den Überdruck radial abzugeben.

In einer bevorzugten Ausführungsform erstreckt sich der Fortsatz entlang der genannten Axialrichtung, wobei die Axialrichtung im Grundzustand einen vorgegebenen Winkel mit der Längsachse (6) einschließt. Der Winkel liegt in einem Bereich zwischen 0° und 180°.

Der Fortsatz ist insbesondere quer zur Längsachse (Winkel = 90°) angeordnet. Alternativ beträgt der Winkel 68°, ist also gegenüber dieser leicht geneigt. Alternativ beträgt der Winkel 45°. So können übliche Rohrabzweigungen (45°, 68°, 90°) besonders gut bearbeitet werden. Andere Winkel können je nach Gegebenheiten einer zu bearbeitenden Rohrabzweigung gewählt werden.

In einer bevorzugten Ausführungsform weist der Träger - zusammen mit der Hülle - einen ersten Expansionszustand auf bzw. ist in einen solchen bringbar, in welchem der erste und der zweite Längsabschnitt jeweils einen ersten Querschnitt aufweisen. Die Querschnitte können, aber müssen hierbei nicht gleich sein. Im ersten Expansionszustand liegt die Hülle reibschlüssig an den Längsabschnitten an. Der Expansionszustand kann auch wieder ein solcher sein, bei dem im Träger ein gewisser Unterdruck gegenüber der Umgebung herrscht. Der Träger ist außerdem in den Längsabschnitten, nun zusammen mit der Hülle, vom ersten in einen zweiten Expansionszustand expandierbar (durch Überdruck und/oder durch Anstieg von einem Unterdruck in Richtung zum Normaldruck, ggf. über diesen hinaus). Nun weisen die Längsabschnitte (Träger und Hülle) zweite Querschnitte auf, die größer als die ersten Querschnitte sind. Auch hier sind die zweiten Querschnitte wieder gleich oder unterschiedlich. Insbesondere ist der Träger mit Hülle im ersten Expansionszustand in ein Rohr einbringbar, wobei der erste Querschnitt des Trägers mit Hülle kleiner dem Innenquerschnitt des Rohres ist. Der zweite Expansionszustand mit dem größeren zweiten Querschnitt ist dann so dimensioniert, dass er (ohne das Rohr) größer ist wie der Innenquerschnitt des Rohres, sodass im Rohr (wo die Expansion auf den Innenquerschnitt des Rohres begrenzt ist) eine Anlage der Längsabschnitte mit Hülle unter Druck an der Innenwand des Rohres erfolgt.

Die Dimensionen der Packeranordnung sind dabei auf die Dimensionen eines bestimmten Rohres, in dem der Packer einzusetzen ist, abgestimmt bzw. ist der Packer für ein solches Rohr geeignet.

So ist die Packeranordnung mit reibschlüssig gehaltener Hülle sicher und in gegebener Konfiguration in das Rohr einführbar und kann dann im Rohr ausreichend expandiert werden, um die Hülle zwischen Träger und Rohrinnenwand zu verpressen, um wie oben erläutert die expandierbare Kammer zu bilden. Im ersten Expansionszustand ist insbesondere die Hülle elastisch minimal bis leicht gedehnt. Insbesondere ist hierzu die Hülle - zumindest im Bereich der Längsabschnitte - dehnbar ausgeführt.

In einer bevorzugten Ausführungsform enthält der Träger mindestens einen flexiblen und/oder dehnbaren Blähkörper. Der Blähkörper ist über einen ersten Medienanschluss mit einem Druckmedium befüllbar, wobei durch die Befüllbarkeit mit Druckmedium und/oder die zumindest teilweise Evakuierung unterhalb des Umgebungsdruckes die Expandierbarkeit zumindest in einem der Längsabschnitte bewirkt ist bzw. wird. Das Druckmedium kann hierbei das gleiche oder ein anderes als das oben genannte Druckmedium für die Auslassöffnung sein. Der Medienanschluss befindet sich insbesondere an der Packeranordnung, insbesondere an einem in Längsachsenrichtung gesehenen Stirnende. Alternativ ragt eine mit dem Blähkörper kommunizierende Verbindungsleitung aus der Packeranordnung heraus bis zu einem außerhalb der Packeranordnung liegenden ersten Medienanschluss. Durch einen Blähkörper kann besonders einfach eine entsprechende Expandierbarkeit gewährleistet werden.

In einer bevorzugten Variante dieser Ausführungsform erstreckt sich der mindestens eine Blähkörper wenigstens über den Kammerabschnitt. Insbesondere erstreckt sich ein einziger Blähkörper mindestens über den Kammerabschnitt. So kann die Expandierbarkeit in den beiden Längsabschnitten, insbesondere durch einen einzigen Blähkörper, besonders einfach bewerkstelligt werden.

In einer bevorzugten Variante dieser Ausführungsform führt eine Zuleitung zur Auslassöffnung durch mindestens einen der Blähkörper. An dem anderen, der Auslassöffnung gegenüberliegenden Ende mündet die Zuleitung in einen zweiten Medienanschluss. So kann über den zweiten Medienanschluss Druckmedium in die Kammer bzw. den Mantelbereich zwischen Träger und Hülle geleitet werden. Auch hier befindet sich der zweite Medienanschluss entweder an der Packeranordnung, insbesondere an deren Stirnende oder die Verbindungsleitung ragt aus der Packeranordnung heraus und führt bis zu einem externen Medienanschluss. Insbesondere ist auch die Auslassöffnung an dem mindestens einen Blähkörper angebracht bzw. vorgesehen. Somit ergibt sich eine besonders einfach zu konstruierende und günstig herzustellende Blähkörperanordnung für die Packeranordnung, die sowohl die Expandierbarkeit der Längsabschnitte als auch die Befüllbarkeit des Mantelbereiches mit dem Druckmedium gewährleistet.

In einer bevorzugten Variante dieser Ausführungsform enthält der Träger einen sich über den gesamten Träger erstreckenden Blähkörper. Mit anderen Worten ist der (nahezu) gesamte Träger als Blähkörper ausgeführt, insbesondere als einziger Blähkörper mit einer einzigen Blähkammer. Der Blähkörper weist dann insbesondere einen einstückigen Mantel auf. Der Träger weist dann neben dem Blähkörper nur noch z.B. Funktionselemente wie zum Beispiel die Medienzuführungen und einen Einsatz mit der Auslassöffnung sowie dessen interne Zuleitung auf. Gegebenenfalls sind noch andere Elemente, zum Beispiel eine Zugöse, am Blähkörper vorgesehen, um den Träger zu bilden. Der Träger ist dann insbesondere ein herkömmlicher Packer bzw. Blähschlauch mit einem Bypass-Ausgang, welcher als Auslassöffnung dient.

Insofern ist Gegenstand der Erfindung auch die Verwendung eines herkömmlichen Packers als Träger in der Packeranordnung.

Die Aufgabe der Erfindung wird auch gelöst durch ein Verfahren gemäß Patentanspruch 11 zum Betreiben einer Packeranordnung, bei dem eine erfindungsgemäße (auf ein bestimmtes Rohr abgestimmte bzw. für dieses Rohr passende) Packeranordnung entlang der Längsachse in das Rohr an einen Zielort eingebracht, insbesondere bis zu diesem vorgeschoben bzw. vorgezogen, wird. Der Träger wird im ersten und zweiten Längsabschnitt radial expandiert, bis er in den Längsabschnitt mit einem Anpressdruck an der Innenwand des Rohres anliegt. Hierbei wird im Bereich der Längsabschnitte die Hülle durch den Anpressdruck zwischen Träger und Innenwand verpresst. Hierdurch wird der Mantelbereich zwischen der Hülle und dem Träger im Bereich der Längsabschnitte zu einer Kammer abgedichtet. Das Druckmedium wird dann über die Auslassöffnung in die Kammer geleitet, um diese zu befüllen.

Das Befüllen der Kammer führt dann je nach Rohr zum Beispiel zu einem lokalen Druckaufbau gegen die Rohrinnenwand im Bereich zwischen den Längsabschnitten oder zu einer weiteren Expansion der Hülle, wenn das Rohr hierfür Raum bietet. Somit können mit der besonders einfachen Packeranordnung besonders einfach gewünschte Arbeiten im Rohr durchgeführt werden.

Das Verfahren und zumindest ein Teil dessen Ausführungsformen sowie die jeweiligen Vorteile wurden sinngemäß bereits im Zusammenhang mit der erfindungsgemäßen Packeranordnung erläutert.

In einer bevorzugten Ausführungsform wird die Packeranordnung in ein Rohr mit einer Rohröffnung in der Rohrwand bzw. Innenwand eingebracht und der Zielort wird dabei so gewählt, dass zumindest ein Teil der Kammer am Ort der Rohröffnung liegt. Durch Befüllen der Kammer mit dem Druckmedium wird die Hülle dann radial auswärts durch die Rohröffnung hindurch expandiert. Somit kann erreicht werden, dass trotz der sehr einfachen Packeranordnung, insbesondere mit einer schlauchförmigen Hülle, eine Expansion des Packers auch in Rohröffnungen hinein, das heißt radial auswärts, erfolgen kann, um dort entsprechende Arbeiten durchzuführen.

In einer bevorzugten Ausführungsform wird die Packeranordnung in ein Rohr eingebracht, dessen Rohröffnung eine Einmündung eines Abzweigrohres in das Rohr ist, und die Hülle wird in das Abzweigrohr hinein expandiert. Somit ist es möglich, mit der einfachen Packeranordnung auch Einmündungen von Abzweigrohren oder sich an die Einmündung anschließende Rohrabschnitte des Abzweigrohres von innen her mit Hilfe der expandierten Hülle zu bearbeiten.

In einer bevorzugten Ausführungsform wird der Träger vor dem Einbringen in das Rohr mit der Hülle versehen. Hierzu wird insbesondere der Träger gegenüber der Umgebung zunächst aus seinem Normalzustand (druck- und kraftlos) komprimiert, z.B. (teil-)evakuiert. Die Hülle wird dann aufgebracht und der Träger wieder expandiert, z.B. zumindest teilweise in Richtung oder bis zum Umgebungsdruck hin oder über diesen hinaus befüllt. Der Träger wird dann in den oben genannten ersten Expansionszustand gebracht, wobei die Packeranordnung dabei einen ersten Querschnitt kleiner dem Innenquerschnitt des Rohres aufweist. Die Packeranordnung wird dann in das Rohr eingebracht. Am Zielort wird die Packeranordnung in den zweiten Expansionszustand gebracht, um die Längsabschnitte mit dem Anpressdruck an der Innenwand des Rohres anzulegen, wobei der zweite Expansionszustand (ohne Rohr) einen zweiten Querschnitt größer dem Innenquerschnitt des Rohres aufweisen würde. Im Rohr kann der entsprechend größere zweite Querschnitt zwar nicht erreicht werden, jedoch legt sich dann die Hülle bzw. der Träger mit Druck an der Innenwand des Rohres an. Anschließend wird wie oben bereits erläutert, die Kammer mit Druck befüllt, um insbesondere die oben genannten Bearbeitungen am Rohr vorzunehmen.

Die Aufgabe wird auch gelöst durch ein Verfahren gemäß Patentanspruch 15 zur Montage einer Auskleidung an einer Innenwand eines Rohres. Die Auskleidung wird radial außen - insbesondere im Bereich der sich später bildenden Kammer - auf die Hülle der erfindungsgemäßen Packeranordnung aufgelegt. Die Auskleidung wird dann mit Hilfe des erfindungsgemäßen Betriebsverfahrens für die Packeranordnung an die Innenwand des Rohres angedrückt, um die Auskleidung an der Innenwand zu montieren. Insbesondere wird dabei die Packeranordnung so montiert, dass sich im gewünschten Bereich, in dem die Auskleidung aufliegt, die Kammer ausbildet.

Insbesondere kann eine Auskleidung somit auch an einem Abzweigrohr bzw. dessen Einmündung oder an einer anderen Rohröffnung, zum Beispiel einer Ausbuchtung des Rohres angebracht werden. Die Auskleidung ist insbesondere ein mit Klebstoff versehenes Gewebe, dessen Montage durch Andrücken an der Rohrinnenwand erfolgt.

Mit anderen Worten können insbesondere mit Hilfe der erfindungsgemäßen Packeranordnung und deren Betriebsverfahren herkömmliche Innenwandbearbeitungen und Innenwandauskleidungen an Rohren durchgeführt werden. Dies erfolgt mit dem besonders einfachen Verfahren und der besonders einfachen erfindungsgemäßen Packeranordnung.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich durch die Druckbeaufschlagung eines Trägers, der auch als Hauptpacker ausgeführt sein kann, und die Druckbeaufschlagung einer im Mantelbereich zwischen Träger und Hülle gebildeten Kammer bzw. der Hülle, die auch als Stulpschlauch bezeichnet werden kann, eine Expansion der Hülle (des Stulpschlauches) radial auswärts, insbesondere durch eine Rohröffnung in der Rohrwand hindurch, insbesondere in eine Einmündung eines Abzweigrohres bzw. ein Stück weit in das Abzweigrohr hinein.

Die Hülle bzw. der Stulpschlauch ist mit dem Träger bzw. dem Hauptpacker nicht verbunden, verklebt etc. Durch radiales Anpressen des Trägers (Hauptpacker) an die Rohrinnenwand wird die Dichtheit der Hülle (Stulpschlauch) erzeugt. Über den Auslass (Auslassöffnung, Bypass am Hauptpacker) wird der Packeranordnung (Stulppacker) die Expansion in die Rohröffnung bzw. das Abzweigrohr ermöglicht.

Die erfindungsgemäße Packeranordnung ist ein gerader Packer, insbesondere mit Stulpschlauch, zur Innenauskleidung von Rohren. Der Träger (Hauptpacker) ist hierbei nicht mit den Enden der Hülle (des Stutzenpackers) verklebt. Die Hülle (der Stulpschlauch) wird über den normalen Packer (Träger) übergestülpt wie ein Schutzschlauch. Über das Auslassventil (Auslassöffnung) kann dann dem dehnbaren Stulpschlauch am Ablass (an der Ablassöffnung) Druck zugeführt werden, sodass dieser (die Kammer und damit die Hülle) expandiert. Gemäß der Erfindung ist also die Hülle am Träger nicht angeklebt, sondern es handelt sich nur um ein Stück.

Ein Packer (Träger), dessen Innenraum mit der Umgebung kommuniziert, ist in der Regel eigenstabil und weist daher stets Luft in seinem Innenraum auf. Dies ist z.B. der Fall bei einem Packer, der (vorn und/oder hinten) noch nicht mit einem Ventil oder einer Verschlusskappe bestückt ist. Wenn man dann den Packer zumindest teilweise evakuiert ("Vakuum zieht"), wird der Packer kontrahieren und wird so (insbesondere extrem) klein bzw. dünn. Wird also der Träger (Packer) durch Vakuumierung entleert, dann der Stulpschlauch aufgebracht, und dann das Vakuum wieder zumindest teilweise gelöst, hält der Stulpschlauch bzw. die Hülle ihre Position auf dem Träger auch ohne dessen explizite Expansion (Überdruck im Träger). Man kann den Stulpschlauch also ohne Expansionsdruck (Überdruck bezüglich der Umgebung) und nur durch Ziehen des Vakuums verwenden bzw. auf dem Träger befestigen.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen in einer schematischen Prinzipskizze:
- Figur 1: eine Packeranordnung gemäß der Erfindung,
- Figur 2: die Packeranordnung aus Figur 1 bei der Auskleidung einer Innenwand eines Rohres,
- Figur 3: eine alternative Packeranordnung,
- Figur 4: eine alternative Packeranordnung mit Fortsatz.

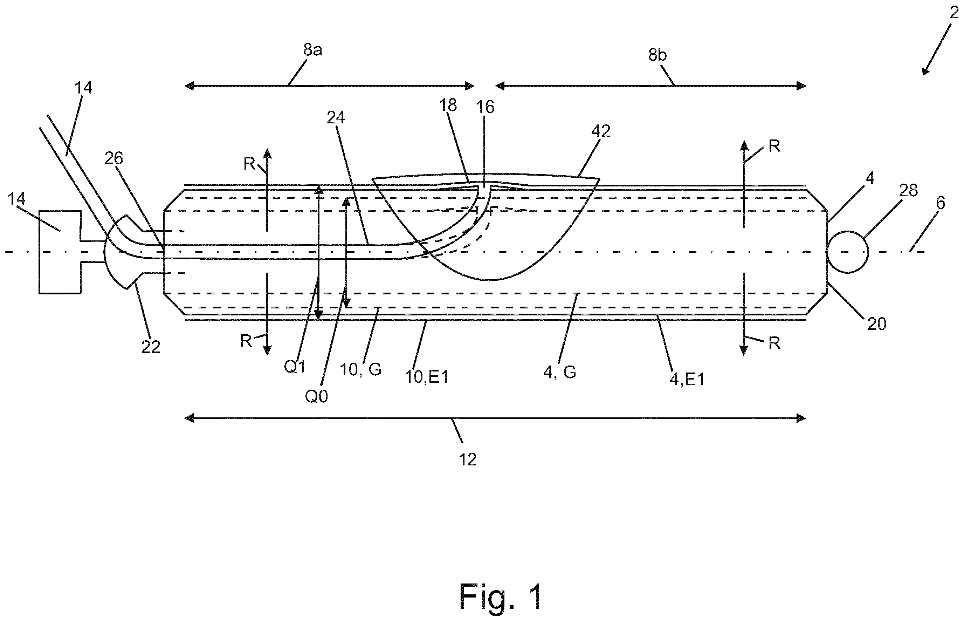

Figur 1 zeigt eine Packeranordnung 2 mit einem Träger 4, der sich entlang einer Längsachse 6 und um diese herum erstreckt. Der Träger 4 ist hier ein einstückiger Blähkörper, der sich über die gesamte Länge der Packeranordnung 2 erstreckt. Der Träger 4 weist einen ersten Längsabschnitt 8a und einen zweiten Längsabschnitt 8b auf, in denen der Träger 4 in die durch Pfeile angedeutete Radialrichtung R expandierbar ist. Hier ist sogar der gesamte Träger 4 im Wesentlichen auf seiner gesamten Länge entsprechend expandierbar.

Die Packeranordnung 2 enthält außerdem eine Hülle 10, die sich ebenfalls entlang der Längsachse 6 und um diese herum erstreckt, und die den Träger 4 in einem Kammerabschnitt 12 mantelförmig radial außen, das heißt in Radialrichtung R außerhalb, umgibt. Der Kammerabschnitt 12 erstreckt sich hierbei vom ersten Längsabschnitt 8a bis zum zweiten Längsabschnitt 8b, jeweils einschließlich, im vorliegenden Fall im Wesentlichen über die gesamte Länge des Trägers 4. Sowohl die Hülle 10 als auch der Träger 4 sind im Kammerabschnitt 12 dicht gegenüber einem Druckmedium 14, hier Druckluft (hier nur angedeutet) ausgeführt.

Der Träger 4 weist zwischen erstem und zweitem Längsabschnitt 8a, b eine radial nach außen, das heißt in Radialrichtung R weisende bzw. offene Auslassöffnung 16 für das Druckmedium 14 auf. Durch die Auslassöffnung 16 kann also Druckmedium 14 in Radialrichtung R ausströmen und strömt dann in einen Mantelbereich 18 ein, der sich zwischen Träger 4 und Hülle 10 befindet. Die Hülle 10 umgibt den Träger 4 lose, das heißt sie ist in keiner Weise verklebt oder sonst verbunden mit diesem. Die Hülle 10 ist flexibel und dehnbar.

Figur 1 zeigt gestrichelt den Träger 4 in kontrahiertem Zustand und die Hülle 10 in einem Grundzustand G, wenn diese ungedehnt und unverformt und lose auf dem Träger 4 aufliegt und sich damit in einer Grundform befindet. Zur Verdeutlichung ist ein Spalt zwischen Träger 4 und Hülle 10 dargestellt, der in dieser Situation nicht zwangsweise vorhanden sein muss. Entlang der Längsachse 6 weist die Hülle 10 hierbei einen konstanten Querschnitt Q0 auf. Der Querschnitt Q0 ist hier eine Kreisform, die Hülle in Ihrer Grundform ist daher ein Stulpschlauch in Form eines Kreiszylindermantels.

Der Träger 4 ist dabei ebenfalls im Grundzustand G (ebenfalls gestrichelt gezeichnet), in dem die Längsabschnitte 8a,b in bzw. entgegen der Radialrichtung R maximal kontrahiert, d.h. nicht expandiert sind. Alternativ ist der Träger im Grundzustand auf einen Druck unterhalb des Umgebungsdruckes evakuiert.

Figur 1 zeigt ausgezogen auch den Träger 4 in einem ersten Expansionszustand E1, wenn dessen Längsabschnitte 8a,b in Radialrichtung R ein Stück weit expandiert sind. Dies erfolgt durch Einleiten von Überdruck oder durch Druckzufuhr in Richtung zum Umgebungsdruck hin oder über diesen hinaus. Auch im Expansionszustand E1 kann der Träger 4 also noch einen Unterdruck gegenüber der Umgebung aufweisen. Die Längsabschnitte 8a, b weisen hierbei erste Querschnitte Q1 auf. Im ersten Expansionszustand E1 ist die Hülle 10 bereits gedehnt und liegt daher bereits eng und reibschlüssig an den Längsabschnitten 8a, b an. Hier ist der Spalt zwischen Hülle 10 und Träger 4 tatsächlich lediglich zur Verdeutlichung dargestellt. Tatsächlich liegen die beiden Teile berührend aneinander an.

Im Beispiel enthält der Träger 4 einen (einzigen) flexiblen und dehnbaren Blähkörper 20, der über einen ersten Medienanschluss 22 mit dem Druckmedium 14 befüllbar ist. Hierdurch wird die Expandierbarkeit der Längsabschnitte 8a,b bewirkt. Der Blähkörper 20 erstreckt sich über den Kammerabschnitt 12. Eine Zuleitung 24 zur Auslassöffnung 16 führt durch den Blähkörper 20. An dem der Auslassöffnung 16 gegenüberliegenden Ende mündet die Zuleitung 24 an einem zweiten Medienanschluss 26. Im Beispiel enthält der Träger 4 also einen einzigen Blähkörper 20, der sich in Richtung der Längsachse 6 über den gesamten Träger 4 erstreckt. Der Blähkörper 20 ist im Wesentlichen mit den Medienanschlüssen 22 und 26, der Zuleitung 24 und der Auslassöffnung 16 versehen. Auch ein Zughaken 28 ist am Blähkörper 20 bzw. Träger 4 befestigt.

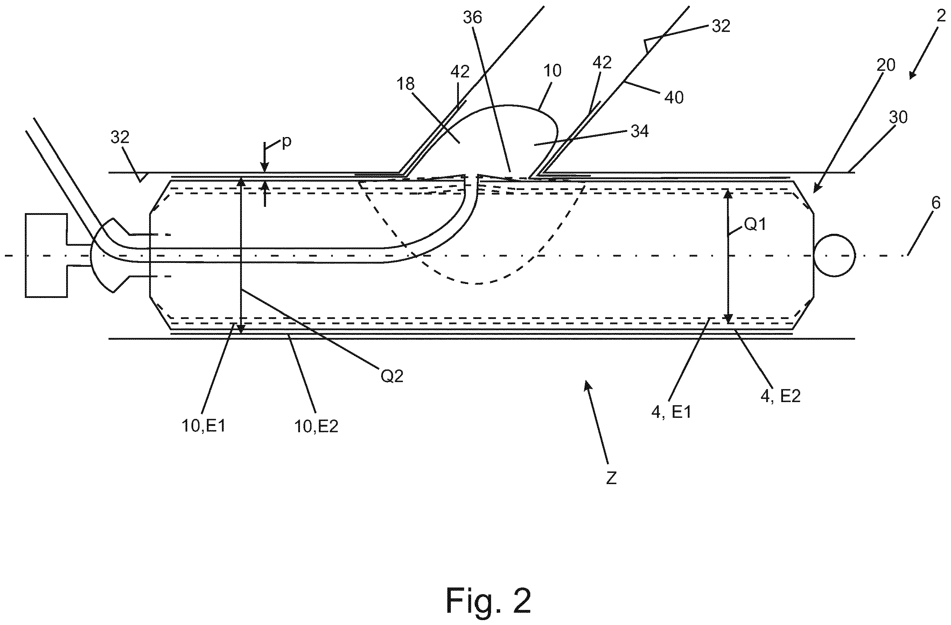

Figur 2 zeigt nochmals (diesmal gestrichelt) Träger 4 und Hülle 10 im Expansionszustand E1. Der Träger 4 wird durch weitere Zufuhr von Druckmedium 14 zusammen mit der Hülle 10 in einen zweiten Expansionszustand E2 gebracht (ausgezogen dargestellt). Die Längsabschnitte 8a,b weisen dann zweite Querschnitte Q2 auf, die größer den Querschnitten Q1 sind. Auch hier ist der Spalt zwischen Hülle 10 und Träger 4 und zwischen Hülle 10 und Rohr 30 lediglich zur Verdeutlichung dargestellt. Tatsächlich liegen die Teile jeweils berührend bzw. unter Druck aneinander an.

Figur 2 veranschaulicht auch ein Betriebsverfahren für die Packeranordnung 2. Bei dem Verfahren wird die Packeranordnung 2 im Expansionszustand E1 entlang der Längsachse 6 in ein Rohr 30 eingebracht und bis zu einem Zielort Z vorgeschoben. Anschließend wird der Träger 4 in Radialrichtung R an seinem ersten und zweiten Längsabschnitt 8a, b expandiert, bis er in den Längsabschnitten 8a, b mit einem Anpressdruck P (indirekt und der Zwischenlage 10) an der Innenwand des Rohres 30 anliegt. Dies entspricht dem Expansionszustand E2, auch wenn dieser dimensionsmäßig nicht eingenommen wird, da das Rohr die Expansion der Packeranordnung 2 auf den Innendurchmesser des Rohres 30 begrenzt.

Die Hülle 10 ist im Expansionszustand E2 durch einen Anpressdruck p zwischen Träger 4 und Innenwand 32 verpresst. Hierdurch ist der Mantelbereich 18 im Bereich der Längsabschnitte 8a, b zwischen der Hülle 10 und dem Träger 4 gegenüber dem Druckmedium 14 abgedichtet, sodass sich eine geschlossene Kammer 34 bildet. Das Druckmedium 14 wird nun über die Auslassöffnung 16 in die Kammer 34 bzw. den Mantelbereich 18 geleitet, um die Kammer 34 zu befüllen.

Das Rohr 30 weist eine Rohröffnung 36 in seiner Rohrwand auf. Der Zielort Z ist so gewählt, dass zumindest ein Teil, hier die gesamte Kammer 34 am Ort der Rohröffnung 36 liegt. Durch Befüllen der Kammer 34 mit dem Druckmedium 14 wird die Hülle 10 radial auswärts, also in Radialrichtung R durch die Rohröffnung 36 hindurch expandiert. Die Rohröffnung 36 ist hier eine Einmündung eines Abzweigrohres 40 in das Rohr 30. Die Hülle 10 wird also in das Abzweigrohr 40 hinein expandiert.

Der Darstellung in Figur 1 ist bezüglich des Verfahrens zu entnehmen, dass der Träger 4 im Grundzustand G vor dem Einbringen in das Rohr 30 mit der Hülle 10 versehen wird und in den ersten Expansionszustand E1 gebracht wird, wobei der erste Querschnitt Q1 kleiner als der Innenquerschnitt des Rohres 30 ist. Erst dann wird die Packeranordnung 2 in das Rohr 30 eingebracht. Erst am Zielort Z wird die Packeranordnung 2 in den zweiten Expansionszustand E2 gebracht, um die Längsabschnitte 8a, b mit dem Anpressdruck p an der Innenwand 32 des Rohres 30 anzulegen.

Das in den Figuren angedeutete Verfahren dient zur Montage einer Auskleidung 42 an der Innenwand 32 des Rohres 30 und der Innenwand 32 des Abzweigrohres 40 bzw. zur Verkleidung des gesamten Einmündungsbereiches des Abzweigrohres 40 in das Rohr 30. Die Auskleidung 42 wird daher gemäß Figur 1 radial außen auf die Hülle 10 der Packeranordnung 2 aufgelegt. Dies erfolgt so, dass die Auskleidung am Zielort Z auf der sich dann bildenden Kammer 34 zu liegen kommt. Mit Hilfe des gemäß Figur 2 angedeuteten Verfahrens, nämlich dem Einbringen und Expandieren des Trägers 4 und der Expansion der Kammer 34 wird die Auskleidung 42 an die Innenwand 32 des Rohres 30 und des Abzweigrohres 40 angedrückt, um diese zu montieren.

Nach erfolgter Montage wird das Druckmedium 14 aus der Kammer 34 und dem Träger 4 abgelassen und die Packeranordnung 2 aus dem Rohr 30 entfernt.

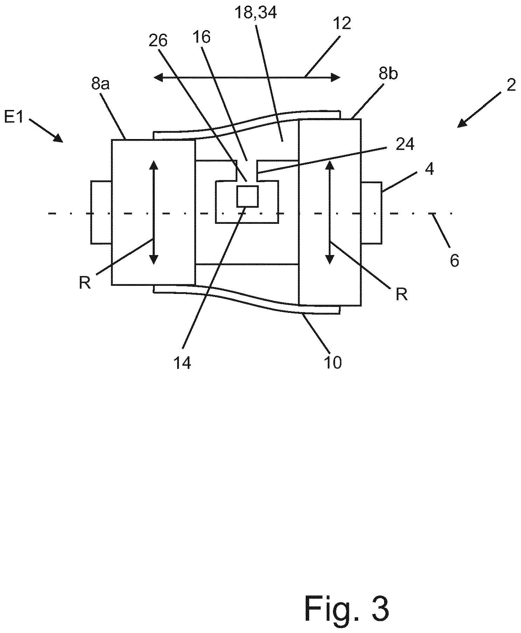

Figur 3 zeigt stark vereinfacht eine alternative Ausführungsform einer Packeranordnung 2. Hier ist der Träger 4 ein mehrteiliger Körper, der einen starren Grundkörper mit beweglichen Elementen aufweist. So sind zwei separate Längsabschnitte 8a,b vorhanden, die hier unabhängig voneinander motorisch expandierbar sind. Die Hülle 10 erstreckt sich nur über Teile der Längsabschnitte 8a,b, so dass sich ein nicht über die gesamte Länge der Anordnung ausgedehnter Kammerabschnitt 12 ergibt. Das Druckmedium 14 wird hier der Auslassöffnung 16 aus dem Inneren des Trägers 4, hier einer nur angedeuteten Druckgasflasche am Mediananschluss 26, zugeführt.

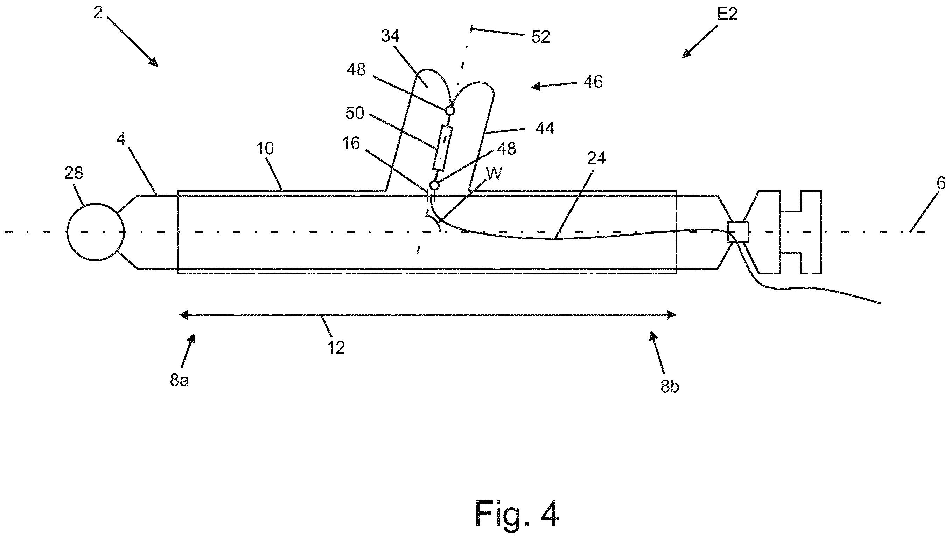

Figur 4 zeigt eine Packeranordnung 2 im Expansionszustand E2, bei der auf dem Träger 4 eine Hülle 10 mit Fortsatz 44 im Kammerabschnitt 12 aufgebracht ist. Die Packeranordnung 2 befindet sich in dem Rohr 30 gemäß Figur 2 (der Übersichtlichkeit halber hier nicht dargestellt). Bei Einbringung in das Rohr 30 ragt der Fortsatz 44 dabei in das Abzweigrohr 40 hinein. So ist beim Aufblähen der Kammer 34 und damit des Fortsatzes 44 eine noch bessere Anformung des gefüllten bzw. aufgeblähten Fortsatzes 44 an das Abzweigrohr 40 bzw. dessen Innenwand 32 möglich.

Am Träger 4, hier insbesondere an der Auslassöffnung 16, und am entfernten Ende 46 des Fortsatzes sind Haltemittel 48, hier Ösen angebracht. Zwischen den Haltemitteln 48 ist ein Begrenzungsmittel 50, hier ein Zugseil, alternativ eine Zugfeder, angeordnet, das eine maximale Längsdehnung des Fortsatzes 44 in dessen Axialrichtung 52 bzw. in das Abzweigrohr 40 hinein begrenzt. Weitere Befüllung der Kammer 34 mit Druckmedium 14 führt zu einer Erhöhung des Radialdruckes bezüglich der Axialrichtung 52 auf die Innenwand 23, ohne den Fortsatz 44 in Axialrichtung 52 weiter zu verlängern. Der Fortsatz 44 ist nicht genau quer zur Längsachse 6 angeordnet (Winkel W = 90°), sondern bezüglich seiner Axialrichtung 52 in einem Winkel W von 68° gegenüber dieser leicht geneigt.

### Bezugszeichenliste

- 2: Packeranordnung
- 4: Träger
- 6: Längsachse
- 8a,b: Längsabschnitt
- 10: Hülle
- 12: Kammerabschnitt
- 14: Druckmedium
- 16: Auslassöffnung
- 18: Mantelbereich
- 20: Blähkörper
- 22: Medienanschluss (erster)
- 24: Zuleitung
- 26: Medienanschluss (zweiter)
- 28: Zughaken
- 30: Rohr
- 32: Innenwand
- 34: Kammer
- 36: Rohröffnung
- 40: Abzweigrohr
- 42: Auskleidung
- 44: Fortsatz
- 46: Ende
- 48: Haltemittel
- 50: Begrenzungsmittel
- 52: Axialrichtung

- R: Radialrichtung
- G: Grundzustand
- Q0,1,2: Querschnitt
- E1,2: Expansionszustand
- Z: Zielort
- p: Anpressdruck
- W: Winkel

## Patentansprüche

1. Packeranordnung (2) zur Innenbearbeitung eines Rohres (30),
- mit einem sich entlang einer Längsachse (6) erstreckenden Träger (4), der mindestens einen ersten (8a) und einen zweiten Längsabschnitt (8b) aufweist, in denen der Träger (4) in einer Radialrichtung (R) zur Längsachse (6) expandierbar ist, wobei durch die in Radialrichtung (R) gerichtete Expandierbarkeit der Längsabschnitte (8a,b) diese in dem zu bearbeitenden Rohr (30) expandiert werden können und damit gegen eine Innenwand (32) des Rohres (30) verpresst werden, wenn die Packeranordnung (2) in das Rohr (30) eingebracht ist,
wobei die Packeranordnung (2) eine sich entlang der Längsachse (6) erstreckende flexible und/oder dehnbare Hülle (10) enthält, die den Träger (4) zumindest in einem Kammerabschnitt (12) vom ersten (8a) bis zum zweiten Längsabschnitt (8b) mantelförmig radial außen umgibt, wobei die Hülle (10) und der Träger (4) im Kammerabschnitt (12) dicht gegenüber einem Druckmedium (14) ausgeführt sind, wobei durch die gegen die Innenwand (32) verpressten Längsabschnitte (8a,b) die Hülle (10) dicht an den Träger (4) gepresst ist und im Bereich der Längsabschnitte (8a,b) in Umfangsrichtung gegenüber dem Träger (4) abgedichtet ist, wenn die Packeranordnung (2) in das Rohr (30) eingebracht ist, und der Träger (4) zwischen erstem (8a) und zweiten Längsabschnitt (8b) eine radial nach außen offene Auslassöffnung (16) für das Druckmedium (14) aufweist, um einen Mantelbereich (18) zwischen Träger (4) und Hülle (10) mit dem Druckmedium (14) zu befüllen.

2. Packeranordnung (2) nach Anspruch 1,
**dadurch gekennzeichnet, dass**
die Hülle (10) den Träger (4) lose umgibt.

3. Packeranordnung (2) nach einem der vorhergehenden Ansprüche,
**dadurch gekennzeichnet, dass**
die Hülle (10) in einem Grundzustand (G) eine Grundform aufweist, die im Kammerabschnitt (12) einen radial auswärts gerichteten Fortsatz (44) enthält.

4. Packeranordnung (2) nach Anspruch 3,
**dadurch gekennzeichnet, dass**
der Fortsatz (44) ein Begrenzungsmittel (50) aufweist, das eine Längsausdehnung des Fortsatzes (44) in dessen Axialrichtung (52) auf eine Maximaldehnung begrenzt.

5. Packeranordnung (2) nach einem der Ansprüche 3 bis 4,
**dadurch gekennzeichnet, dass**
der Fortsatz (44) sich entlang einer Axialrichtung (52) erstreckt, wobei die Axialrichtung (52) im Grundzustand (G) einen vorgegebenen Winkel (W) zwischen 0° und 180° mit der Längsachse (6) einschließt.

6. Packeranordnung (2) nach einem der vorhergehenden Ansprüche,
**dadurch gekennzeichnet, dass**
der Träger (4) mit Hülle (10) in einen ersten Expansionszustand (E1) mit ersten Querschnitten (Q1) an den Längsabschnitten (8a,b) bringbar ist, wobei die Hülle (10) im ersten Expansionszustand (E1) reibschlüssig an den Längsabschnitten (8a,b) anliegt und der Träger (4) in den Längsabschnitten (8a, b) zusammen mit der Hülle (10) in einen zweiten Expansionszustand (E2) mit größeren zweiten Querschnitten (Q2) expandierbar ist.

7. Packeranordnung (2) nach einem der vorhergehenden Ansprüche,
**dadurch gekennzeichnet, dass**
der Träger (4) mindestens einen flexiblen und/oder dehnbaren Blähkörper (20) enthält, der über einen ersten Medienanschluss (22) mit einem Druckmedium (14) befüllbar ist, wobei hierdurch zumindest in einem der Längsabschnitte (8a) die Expandierbarkeit bewirkt ist.

8. Packeranordnung (2) nach Anspruch 7,
**dadurch gekennzeichnet, dass**
sich der mindestens eine Blähkörper (20) wenigstens über den Kammerabschnitt (12) erstreckt.

9. Packeranordnung (2) nach Anspruch 7 oder 8,
**dadurch gekennzeichnet, dass**
eine Zuleitung (24) zur Auslassöffnung (16) durch mindestens einen der Blähkörper (20) führt, wobei die Zuleitung (24) an ihrem anderen Ende an einem zweiten Medienanschluss (26) mündet.

10. Packeranordnung (2) nach einem der Ansprüche 7 bis 9,
**dadurch gekennzeichnet, dass**
der Träger (4) einen sich über den gesamten Träger (4) erstreckenden Blähkörper (20) enthält.

11. Verfahren zum Betreiben einer Packeranordnung (2),
**dadurch gekennzeichnet, dass**
- eine Packeranordnung (2) nach einem der Ansprüche 1 bis 10 entlang der Längsachse (6) in das Rohr (30) an einen Zielort (Z) eingebracht wird,
- der Träger (4) im ersten (8a) und zweiten Längsabschnitt (8b) radial expandiert wird, bis er in den Längsabschnitten (8a,b) mit einem Anpressdruck (p) an der Innenwand (32) des Rohres (30) anliegt, wobei die Hülle (10) durch den Anpressdruck (p) im Bereich der Längsabschnitte (8a b) zwischen Träger (4) und Innenwand (32) verpresst wird, wodurch der Mantelbereich (18) zwischen der Hülle (10) und dem Träger (4) im Bereich der Längsabschnitte (8a,b) zu einer Kammer (34) abgedichtet wird,
- das Druckmedium (14) über die Auslassöffnung (16) in die Kammer (34) geleitet wird, um diese zu befüllen.

12. Verfahren nach Anspruch 11,
**dadurch gekennzeichnet, dass**
- die Packeranordnung (2) in ein Rohr (30) mit einer Rohröffnung (36) in der Innenwand (32) eingebracht wird, und der Zielort (Z) so gewählt wird, dass zumindest ein Teil der Kammer (34) am Ort der Rohröffnung (36) liegt,
- durch Befüllen der Kammer (34) mit dem Druckmedium (14) die Hülle (10) radial auswärts durch die Rohröffnung (36) hindurch expandiert wird.

13. Verfahren nach Anspruch 12,
**dadurch gekennzeichnet, dass**
- die Packeranordnung (2) in ein Rohr (30) eingebracht wird, dessen Rohröffnung (36) eine Einmündung eines Abzweigrohres (40) in das Rohr (30) ist, und die Hülle (10) in das Abzweigrohr (40) hinein expandiert wird.

14. Verfahren nach einem der Ansprüche 11 bis 13 in Verbindung mit Anspruch 6, **dadurch gekennzeichnet, dass**
- der Träger (4) vor dem Einbringen in das Rohr (30) mit der Hülle (10) versehen wird,
- der Träger (4) in den ersten Expansionszustand (E1) gebracht wird, wobei die Packeranordnung (2) dabei einen ersten Querschnitt (Q1) kleiner dem Innenquerschnitt des Rohres (30) aufweist,
- die Packeranordnung (2) in das Rohr (30) eingebracht wird,
- die Packeranordnung (2) am Zielort (Z) in den zweiten Expansionszustand (E1) gebracht wird, um die Längsabschnitte (8a, b) mit dem Anpressdruck (p) an der Innenwand (32) des Rohres (30) anzulegen.

15. Verfahren zur Montage einer Auskleidung (42) an einer Innenwand (32) eines Rohres (30),
**dadurch gekennzeichnet, dass**
- die Auskleidung (42) radial außen auf die Hülle (10) einer Packeranordnung (2) gemäß einem der Ansprüche 1 bis 10 aufgelegt wird,
- die Auskleidung (42) mit Hilfe des Verfahrens nach einem der Ansprüche 11 bis 14 an die Innenwand (32) des Rohres (30) angedrückt wird, um diese zu montieren.

## Claims

1. A packing arrangement (2) for machining the interior of a pipe (30),
- having a carrier (4) extending along a longitudinal axis (6), said carrier having at least one first (8a) and one second longitudinal portion (8b), in which the carrier (4) is expandable in a radial direction (R) to the longitudinal axis (6), wherein due to the expandability of the longitudinal portions (8a,b) oriented in the radial direction (R), said longitudinal portions can be expanded in the pipe (30) to be machined and are therefore pressed against an inner wall (32) of the pipe (30) when the packing arrangement (2) is introduced into the pipe (30),
wherein the packing arrangement (2) contains a flexible and/or stretchable sleeve (10) extending along the longitudinal axis (6), which surrounds the carrier (4) radially outwards in the manner of a jacket at least in a chamber portion (12) from the first (8a) up to the second longitudinal portion (8b), wherein the sleeve (10) and the carrier (4) are designed to be impermeable to a pressure medium (14) in the chamber portion (12), wherein the sleeve (10) is squeezed tightly against the carrier (4) by the longitudinal portions (8a,b) pressed against the inner wall (32) and is sealed with respect to the carrier (4) in the region of the longitudinal portions (8a,b) in the circumferential direction when the packing arrangement (2) is introduced into the pipe (30), and the carrier (4) has an outlet opening (16) for the pressure medium (14) which is open radially outwards between the first (8a) and second longitudinal portion (8b), in order to fill a jacket region (18) between the carrier (4) and the sleeve (10) with the pressure medium (14).

2. The packing arrangement (2) according to Claim 1,
**characterised in that**
the sleeve (10) loosely surrounds the carrier (4).

3. The packing arrangement (2) according to any one of the preceding claims,
**characterised in that**
the sleeve (10) has, in a basic condition (G), a basic form which contains a radially outwardly oriented projection (44) in the chamber portion (12).

4. The packing arrangement (2) according to Claim 3,
**characterised in that**
the projection (44) has a limiting means (50) which limits a longitudinal extent of the projection (44) in its axial direction (52) to a maximum elongation.

5. The packing arrangement (2) according to any one of Claims 3 to 4,
**characterised in that**
the projection (44) extends along an axial direction (52), wherein, in the basic condition (G), the axial direction (52) encloses a predefined angle (W) between 0° and 180° with the longitudinal axis (6).

6. The packing arrangement (2) according to any one of the preceding claims,
**characterised in that**
the carrier (4) having the sleeve (10) can be brought into a first expansion condition (E1) having first cross-sections (Q1) on the longitudinal portions (8a,b), wherein the sleeve (10) rests in a frictionally engaged manner on the longitudinal portions (8a,b) in the first expansion condition (E1), and the carrier (4) is expandable in the longitudinal portions (8a,b) together with the sleeve (10) into a second expansion condition (E2) having larger second cross-sections (Q2).

7. The packing arrangement (2) according to any one of the preceding claims,
**characterised in that**
the carrier (4) contains at least one flexible and/or stretchable inflatable body (20) which can be filled with a pressure medium (14) via a first media connection (22), wherein this produces the expandability at least in one of the longitudinal portions (8a).

8. The packing arrangement (2) according to Claim 7,
**characterised in that**
the at least one inflatable body (20) extends at least over the chamber portion (12).

9. The packing arrangement (2) according to Claim 7 or 8,
**characterised in that**
a supply line (24) leads to the outlet opening (16) through at least one of the inflatable bodies (20), wherein the supply line (24) opens out at its other end at a second media connection (26).

10. The packing arrangement (2) according to any one of Claims 7 to 9,
**characterised in that**
the carrier (4) contains an inflatable body (20) extending over the entire carrier (4).

11. A method for operating a packing arrangement (2),
**characterised in that**
- a packing arrangement (2) according to any one of Claims 1 to 10 is introduced along the longitudinal axis (6) into the pipe (30) at a destination (Z),
- the carrier (4) is radially expanded in the first (8a) and second longitudinal portion (8b) until it rests in the longitudinal portions (8a,b) with a contact pressure (p) on the inner wall (32) of the pipe (30), wherein the sleeve (10) is pressed by the contact pressure (p) in the region of the longitudinal portions (8a,b) between the carrier (4) and inner wall (32), as a result of which the jacket region (18) is sealed between the sleeve (10) and the carrier (4) in the region of the longitudinal portions (8a,b) to form a chamber (34),
- the pressure medium (14) is conducted via the outlet opening (16) into the chamber (34) in order to fill the latter.

12. The method according to Claim 11,
**characterised in that**
- the packing arrangement (2) is introduced into a pipe (30) having a pipe opening (36) in the inner wall (32), and the destination (Z) is selected so that at least a part of the chamber (34) lies at the location of the pipe opening (36),
- as a result of filling the chamber (34) with the pressure medium (14) the sleeve (10) is expanded radially outwards through the pipe opening (36).

13. The method according to Claim 12,
**characterised in that**
- the packing arrangement (2) is introduced into a pipe (30), the pipe opening (36) of which is a mouth of a branch pipe (40) into the pipe (30), and the sleeve (10) is expanded into the branch pipe (40).

14. The method according to any one of Claims 11 to 13 in conjunction with Claim 6,
**characterised in that**
- prior to introduction into the pipe (30), the carrier (4) is provided with the sleeve (10),
- the carrier (4) is brought into the first expansion condition (E1), wherein the packing arrangement (2) has a first cross-section (Q1) smaller than the internal cross-section of the pipe (30),
- the packing arrangement (2) is introduced into the pipe (30),
- the packing arrangement (2) is brought into the second expansion condition (E1) at the destination (Z), in order to supply the contact pressure (p) to the longitudinal portions (8a, b) on the inner wall (32) of the pipe (30).

15. A method for fitting a lining (42) to an inner wall (32) of a pipe (30), **characterised in that**
- the lining (42) is placed radially outwards on the sleeve (10) of a packing arrangement (2) according to any one of Claims 1 to 10,
- the lining (42) is pressed with the aid of the method according to any one of Claims 11 to 14 onto the inner wall (32) of the pipe (30), in order to fit said lining.

## Revendications

1. Dispositif de packer (2) pour le traitement intérieur d'un tube (30),
- avec un support (4) s'étendant le long d'un axe longitudinal (6), lequel support présente au moins un premier tronçon longitudinal (8a) et un deuxième tronçon longitudinal (8b), dans lesquels le support (4) est expansible dans une direction radiale (R) par rapport à l'axe longitudinal (6), les tronçons longitudinaux (8a,b) pouvant être expansés dans le tube (30) devant être traité grâce à leur expansibilité orientée dans la direction radiale (R) et pouvant être comprimés contre la paroi intérieure (32) du tube (30) lorsque le dispositif de packer (2) est introduit dans le tube (30),
le dispositif de packer (2) comprenant une gaine (10) flexible et/ou extensible s'étendant le long de l'axe longitudinal (6), laquelle entoure radialement de l'extérieur, à la façon d'une chemise, le support (4) au moins dans une section de chambre (12) du premier tronçon longitudinal (8a) au deuxième tronçon longitudinal (8b), la gaine (10) et le support (4) étant réalisés de façon étanche à un médium sous pression (14) dans la section de chambre (12), la gaine (10) étant comprimée de façon étanche sur le support (4) par les tronçons longitudinaux (8a,b) comprimés contre la paroi intérieure (32) et étant étanchéifiéé par rapport au support (4) dans la zone des tronçons longitudinaux (8a,b) dans la direction circonférentielle lorsque le dispositif de packer (2) est introduit dans le tube (30), et le support (4) présentant, entre le premier tronçon (8a) et le deuxième tronçon (8b), une ouverture de sortie (16) ouverte radialement vers l'extérieur pour le fluide sous pression (14), afin de remplir une zone de chemise (18) entre le support (4) et la gaine (10) avec le fluide sous pression (14).

2. Dispositif de packer (2) selon la revendication 1,
**caractérisé en ce que**
la gaine (10) entoure le support (4) de façon lâche.

3. Dispositif de packer (2) selon l'une quelconque des revendications précédentes,
**caractérisé en ce que**
la gaine présente une forme de base dans un état de base (G), laquelle forme comprend un prolongement (44) dirigé radialement vers l'extérieur, dans la section de chambre (12).

4. Dispositif de packer (2) selon la revendication 3,
**caractérisé en ce que**
le prolongement (44) présente un moyen de limitation (50), lequel limite à une extension maximale une extension longitudinale du prolongement (44) dans sa direction axiale (52).

5. Dispositif de packer (2) selon l'une des revendications 3 à 4,
**caractérisé en ce que**
le prolongement (44) s'étend le long d'une direction axiale (52), la direction axiale (52) incluant, dans l'état de base (G), un angle spécifié (W) entre 0° et 180° avec l'axe longitudinal (6).

6. Dispositif de packer (2) selon l'une quelconque des revendications précédentes,
**caractérisé en ce que**
le support (4) avec la gaine (10) peut être amené dans un premier état d'expansion (E1) avec des premières sections (Q1), au niveau des tronçons longitudinaux (8a,b), la gaine (10) étant appuyée par friction contre les tronçons longitudinaux (8a,b) dans le premier état d'expansion (E1), et le support (4) étant expansible dans les tronçons longitudinaux (8a,b) conjointement avec la gaine (10) en un deuxième état d'expansion (E2), avec des deuxièmes sections plus grandes (Q2).

7. Dispositif de packer (2) selon l'une quelconque des revendications précédentes,
**caractérisé en ce que**
le support (4) comprend au moins un corps gonflable (20) flexible et/ou extensible, lequel peut être rempli avec un fluide sous pression (14) par un premier raccordement de fluide (22), l'expansibilité, par cela au moins, étant réalisée dans un des tronçons longitudinaux (8a).

8. Dispositif de packer (2) selon la revendication 7,
**caractérisé en ce que**
l'au moins un corps gonflable (20) s'étend au moins à travers la section de chambre (12).

9. Dispositif de packer (2) selon la revendication 7 ou 8,
**caractérisé en ce qu'**
une conduite d'admission (24) mène à l'ouverture de sortie (16) par au moins un des corps gonflables (20), la conduite d'admission (24) débouchant sur un deuxième raccordement de fluide (26) à son autre extrémité.

10. Dispositif de packer (2) selon l'une des revendications 7 à 9,
**caractérisé en ce que**
le support (4) comprend un corps gonflable (20) s'étendant à travers la totalité du support (4).

11. Procédé pour l'exploitation d'un dispositif de packer (2),
**caractérisé en ce que**
- un dispositif de packer (2) selon l'une des revendications 1 à 10 est introduit dans le tube (30) à un emplacement cible (Z), le long de l'axe longitudinal (6),
- le support (4) est dilaté radialement dans le premier tronçon longitudinal (8a) et le deuxième tronçon longitudinal (8b), jusqu'à ce qu'il soit appuyé dans les tronçons longitudinaux (8a,b) contre la paroi intérieure (32) du tube (30) avec une pression d'appui (p), la gaine (10) étant comprimée dans la zone des tronçons longitudinaux (8a,b) entre le support (4) et la paroi intérieure (32), la zone de chemise (18) entre la gaine (10) et le support (4) étant étanchéifiée en formant une chambre (34) dans la zone des tronçons longitudinaux (8a,b),
- le fluide sous pression (14) est introduit dans la chambre (34) par l'ouverture de sortie (16), afin de remplir celle-ci.

12. Procédé selon la revendication 11,
**caractérisé en ce que**
- le dispositif de packer (2) est introduit dans un tube (30) avec une ouverture de tube (36) dans la paroi intérieure (32), et l'emplacement cible (Z) est sélectionné de telle sorte qu'au moins une partie de la chambre (34) se trouve à l'endroit de l'ouverture du tube (36),
- la gaine (10) est dilatée radialement vers l'extérieur à travers l'ouverture du tube (36), par le remplissage de la chambre (34) avec le fluide de pression (14).

13. Procédé selon la revendication 12,
**caractérisé en ce que**
- le dispositif de packer (2) est introduit dans un tube (30) dont l'ouverture de tube (36) est une entrée d'un tuyau de branchement (40) dans le tube (30), et la gaine (30) est dilatée dans le tuyau de branchement (40).

14. Procédé selon l'une des revendications 11 à 13 en association avec la revendication 6,
**caractérisé en ce que**
- le support (4) est équipé de la gaine (10) avant l'introduction dans le tube (30),
- le support (4) est amené dans le premier état d'expansion (E1), le dispositif de packer (2) présentant une première section (Q1) inférieure à la section intérieure du tube (30),
- le dispositif de packer (2) est introduit dans le tube (30),
- le dispositif de packer (2) est amené dans le deuxième état d'expansion (E1) à l'emplacement cible (Z) afin d'appuyer les tronçons longitudinaux (8a,b) contre la paroi intérieure (32) du tube (30) avec la pression d'appui (p).

15. Procédé pour le montage d'une enveloppe (42) sur une paroi intérieure (32) d'un tube (30),
**caractérisé en ce que**
- l'enveloppe (42) est posée radialement de l'extérieur sur la gaine (10) d'un dispositif de packer (2) selon l'une des revendications 1 à 10,
- l'enveloppe (42) est appuyée contre la paroi intérieure (32) du tube (30) à l'aide du procédé selon l'une des revendications 11 à 14, afin qu'elle soit installée.
